# FASCICULE DE BREVET EUROPEEN

(11) **EP 0 779 504 B1**
(45) Date de publication et mention de la délivrance du brevet: **19.09.2001**
(21) Numéro de dépôt: 96402701.5
(22) Date de dépôt: 12.12.1996
(51) Int. Cl.: G01M 17/04, G01M 17/10

(54) **Dipositif et procédé pour le diagnostic de l'état d'éléments de suspension notamment oléopneumatique d'un véhicule à chenilles ou à roues**
Vorrichtung und Verfahren zur Diagnose des Zustandes von insbesondere hydropneumatischen Fahrwerkteilen eines Rad- oder Kettenfahrzeugs
Device and procedure for diagnosing the condition of suspension elements, in particular oleopneumatic, of a tracked or wheeled vehicle

(30) Priorité: 13.12.1995 FR 9514719
(43) Date de publication de la demande: 18.06.1997
(73) Titulaire: Société d'Applications des Machines Motrices, 91570 Bièvres (FR)
(72) Inventeur: Nonnez, Bernard, 93190 Livry-Gargan (FR); Arnaud Alain, 92290 Chatenay Malabry (FR); Trotet Jean-François, 27950 Saint Marcel (FR)
(74) Mandataire: Gendraud, Pierre

(56) Documents cités:
- FR-A- 2 354 553
- FR-A- 2 506 014
- FR-A- 2 588 378
- NTIS TECH NOTES, Juin 1982, SPRINGFIELD, VA US, XP002011116 "TESTING TRACKED-VEHICLE SUSPENSIONS"

## Description

L'invention est relative à un dispositif et à un procédé pour le diagnostic de l'état d'éléments de suspension notamment oléopneumatique d'un véhicule à chenilles ou à roues.

Elle se rapporte plus précisément au contrôle de la raideur de suspension de ces éléments pourvus d'une roue ou d'un galet qui roule sur le sol ou sur un tronçon de chenille appliqué sur le sol, et qui est mobile à peu près verticalement en étant relié par des organes de liaison mécaniques ou hydromécaniques à un ressort maintenu sur la structure du véhicule. Ce ressort est par exemple pneumatique et relié par un transmetteur hydraulique à un bras portant la roue ou le galet et pivotant sur un axe transversal du véhicule.

La raideur en question augmente lorsque le ressort se comprime, donc lorsque le galet ou la roue s'élève par rapport à la structure du véhicule. Par suite le contrôle de la raideur s'effectue généralement pour une position déterminée du galet ou de la roue, donc des organes de liaison.

Ainsi un procédé connu de contrôle de la suspension d'un véhicule à chenilles consiste à soulever le véhicule puis à retirer la chenille associée aux éléments de suspension à contrôler, de manière que le galet de chaque élément s'abaisse jusqu'à une position inférieure déterminée par mise en appui d'un des organes de liaison correspondants sur une butée de détente ; puis une mesure de la pression dans le ressort pneumatique et/ou dans le transmetteur hydraulique révèle une valeur qui est comparée à une valeur de pression requise connue pour cette position du galet ; un écart notable éventuel entre ces deux valeurs est significatif d'une raideur incorrecte du ressort pneumatique, donc d'un état défectueux de l'élément de suspension.

Une telle méthode de contrôle s'avère particulièrement longue à réaliser et coûteuse à cause de la levée du véhicule et du retrait -puis du remontage- de la chenille, nécessitant un matériel d'autant plus conséquent et une dépense d'énergie d'autant plus importante que le véhicule est plus lourd et muni d'un plus grand nombre d'éléments de suspension, ce qui est en particulier le cas des chars de combat.

II est connu du document FR-A-2 354 553 un dispositif pour la mesure de l'amortissement d'une organe de suspension de véhicule constitué d'un amortisseur et d'un ressort, comprenant un moteur à vitesse variable apte à imprimer par l'intermédiaire d'une came un mouvement vertical sinusoïdal à la roue disposée sur un support sous lequel est disposé un capteur de mesure de force et sur lequel est disposé un capteur de mesure de déplacement entre les deux extrémités de l'amortisseur.

Il est connu du document FR-A-2 506 014 un appareil de bord pour contrôler les amortisseurs de suspension d'un véhicule automobile comprenant un capteur de force disposé entre l'extrémité supérieure du ressort et la carrosserie du véhicule et relié à un dispositif de mesure enregistrant les variations de force.

Il est connu du document FR-A-2 588 378 un procédé destiné à contrôler les éléments de suspension et la géométrie du chassis d'un véhicule automobile qui consiste à mettre les deux roues d'un même essieu sur les deux plateaux d'une balance articulée, à mesurer la hauteur de caisse depuis le sol aux points prévus par le constructeur du véhicule, à mesurer la différence de hauteur entre le sol et l'un des plateaux puis à comparer les hauteurs de caisse du véhicule et la hauteur prévue par le constructeur.

L'invention vise à éviter ces inconvénients en proposant un dispositif et un procédé qui permettent de diagnostiquer l'état des éléments de suspension en question sans lever le véhicule et, dans le cas d'un véhicule à chenilles, sans retirer celles-ci.

A cet effet, le procédé selon l'invention consiste à effectuer un simple déplacement du véhicule sur le sol ; à détecter, en laissant le véhicule à l'arrêt posé sur le sol, la position du galet ou de la roue, ou d'un organe de liaison associé, par rapport à la structure du véhicule et l'effort exercé par le galet ou la roue sur la chenille ou sur le sol, et de préférence aussi la température du ressort s'il est pneumatique, puis à comparer cet effort à celui requis préétabli correspondant à la position détectée et éventuellement à la température détectée.

Le dispositif selon l'invention permettant de mettre en oeuvre ce procédé comporte au moins un capteur pour la détection de position en question, un capteur d'effort placé sous le galet ou la roue, et de préférence un capteur de température associé au ressort s'il est pneumatique.

Suivant quelques agencements préférés de ce dispositif et de ce procédé :
- dans le cas d'un véhicule à chenilles, le capteur d'effort est fixé sur un tronçon de chenille appliqué sur le sol ;
- la détection de position s'effectue au moyen de deux capteurs d'inclinaison respectivement disposés sur un bras de liaison et sur la structure du véhicule ;
- les valeurs mesurées par les capteurs sont introduites dans un calculateur ou un ordinateur chargé d'un logiciel spécifique dans lequel sont mémorisées et modélisées les valeurs requises de l'effort exercé par le galet ou la roue en fonction de sa position et éventuellement de la température du ressort s'il est pneumatique.

Un mode de réalisation du dispositif selon l'invention est décrit ci-après, avec référence aux dessins annexés parmi lesquels :
- la figure 1 est une vue latérale simplifiée d'une partie d'un véhicule à suspension oléopneumatique équipé du dispositif,
- et la figure 2 est un exemple d'affichage sur l'écran d'un micro-ordinateur faisant partie du dispositif:

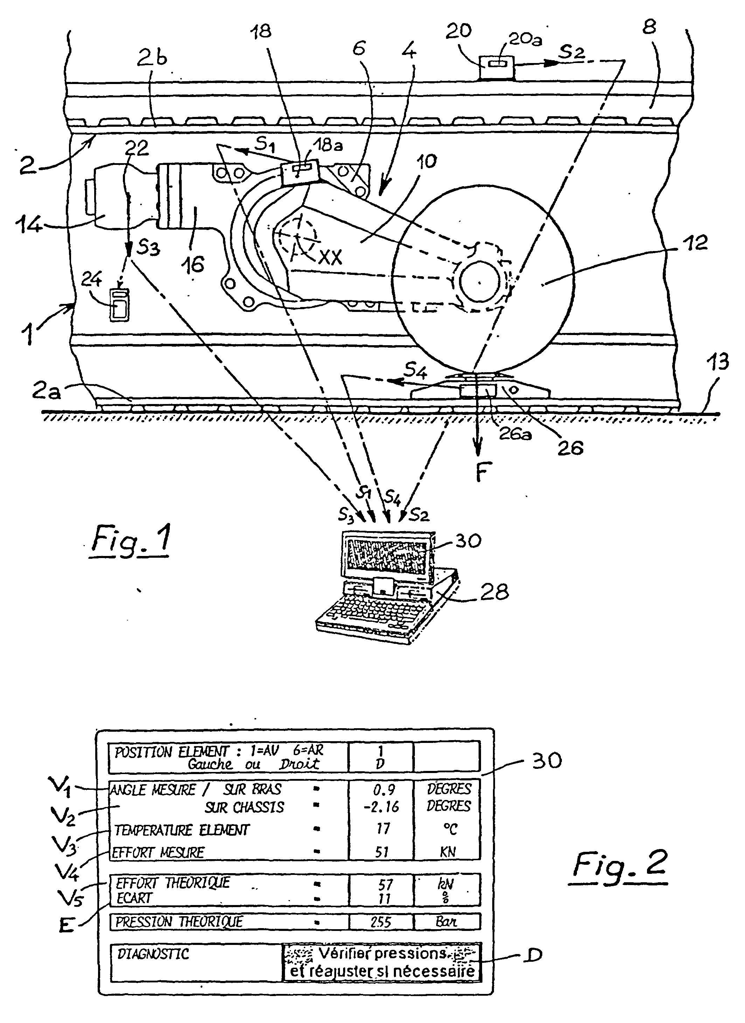

On voit sur la figure 1 une portion inférieure latérale 1 d'un véhicule chenillé tel qu'un char de combat comportant de chaque côté, entre des tronçons inférieur 2a et supérieur 2b d'une chenille 2, plusieurs éléments de suspension 4 dont un seul est visible ici.

Cet élément 4 comporte un support 6 fixé à la structure 8 du véhicule et un bras longitudinal 10 qui pivote sur ce support autour d'un axe XX transversal au véhicule et qui porte à son extrémité libre un galet 12 destiné à rouler sur le tronçon inférieur 2a de la chenille appliqué sur le sol 13.

Le bras 10 relie de façon connue le galet 12 à au moins un ressort pneumatique 14 par l'intermédiaire d'un transmetteur hydraulique 16 muni d'un piston et d'un amortisseur.
Le ressort 14 contenant du gaz comprimé est généralement à peu près sphérique et désigné sphère de suspension. La pression du gaz dans la sphère 14 provoque, dans le support 6, une poussée sur le bras tendant à le faire pivoter vers le bas, ainsi que le galet, celui-ci exerçant par suite un effort vertical F sur le tronçon inférieur de la chenille. Cet effort varie, comme la pression de gaz dans la sphère, en fonction de la position de pivotement du bras selon une raideur de suspension d'autant plus élevée que le gaz est plus comprimé et donc que le bras et le galet sont plus hauts par rapport à la structure du véhicule et que la sphère est plus chaude.

Une déficience éventuelle de l'élément de suspension, due généralement à une perte pression du gaz ou à une fuite de liquide du transmetteur 16, se traduit par une diminution de cette raideur, et donc de l'effort F exercé par le galet.

Pour pouvoir détecter cette déficience en toute position d'utilisation du véhicule sur le sol, le dispositif comprend au moins un capteur sensible à la position en hauteur du galet, par exemple deux capteurs d'inclinaison 18 et 20 disposés respectivement sur le bras et sur la structure du véhicule, un capteur de température 22 -désigné sonde-associé à la sphère et relié à un indicateur 24, un capteur d'effort 26 - désigné cellule- fixé de façon aisément amovible sur le tronçon inférieur 2a de la chenille, et un micro-ordinateur 28 qui peut être relié aux quatre capteurs - par exemple par câbles, radio ou télémétrie- de manière à recevoir des signaux S1, S2, S3, S4 qu'ils émettent respectivement, et chargé d'un logiciel spécifique apte à traiter ces signaux selon les opérations indiquées ci-après.

Les capteurs 18 et 20 mesurent les inclinaisons par rapport à l'horizontale d'une face du bras 10 et d'une face de la structure 8, et le micro-ordinateur déduit des signaux correspondants S1 et S2 des valeurs d'angles V1 et V2 dont la différence est représentative de la position de pivotement du bras.

La cellule 26 fixée à la chenille pour la durée du contrôle est placée, en faisant avancer ou reculer légèrement le véhicule, sous le galet 12 de manière à être interposée verticalement entre celui-ci et le tronçon 2a de la chenille, et à capter l'effort F du galet, d'où résulte un signal S4 que l'ordinateur traduit par une valeur V4 de cet effort.

De même, le signal S3 de la sonde 22 est introduit dans l'ordinateur, qui le traduit par une valeur V3 de la température mesurée de la sphère.

Ces valeurs mesurées V1, V2, V3, V4 sont affichées sur un écran (30) ainsi qu'une valeur théorique V5 de l'effort requis c'est-à-dire de l'effort que procurerait un élément de suspension en parfait état pour la même position du bras et la même température que celles mesurées. Cette valeur V5 est extraite d'informations mémorisées dans l'ordinateur, où sont modélisées les valeurs requises de cet effort en fonction des valeurs représentatives de la position de pivotement du bras et de la température.

Enfin, l'ordinateur compare la valeur mesurée V4 de l'effort F à celle requise V5 ; l'écart E entre ces valeurs est affiché sur l'écran ainsi que le diagnostic D qui s'en déduit : si cet écart entre l'effort mesuré et l'effort requis (et par suite entre la raideur de suspension effective et celle requise) est supérieur à un seuil déterminé, l'état de l'élément de suspension est estimé déficient. Deux seuils peuvent être prévus, correspondant respectivement à un réajustement des quantités et des pressions de gaz ou de liquide, et à une nécessité de déposer l'élément de suspension.

Diverses variantes du dispositif et du procédé susmentionné sont envisageables. Ainsi les capteurs, au lieu d'être reliés à l'ordinateur, peuvent être associés à des indicateurs 24, 18a, 20a, 26a affichant respectivement les valeurs mesurées V1, V2, V3 et V4, qui sont alors lues et introduites manuellement dans l'ordinateur par un clavier.

L'emploi du capteur de température peut dans certains cas être évité, notamment si le diagnostic s'effectue dans des conditions de température connues ou au moins approximativement déterminées autrement que par un capteur tel que la sonde 22. Cet emploi est même inutile dans le cas où les éléments de suspension comportent des ressorts non pneumatiques.

Par ailleurs, un dispositif équivalent à celui décrit ci-dessus peut être adapté au contrôle d'éléments de suspension de véhicules à roues.

Dans leurs divers modes de réalisation, le dispositif et le procédé selon l'invention permettent un diagnostic particulièrement rapide de plusieurs éléments de suspension équipant un véhicule, et ils s'avèrent surtout avantageux lorsqu'il s'agit d'un véhicule très lourd tel qu'un char de combat ou autre gros véhicule à chenilles ou à roues, puisque le contrôle de suspension s'effectue en laissant le véhicule sur le sol et que le passage du capteur d'effort d'une position sous le galet ou la roue d'un élément de suspension à une position sous le galet ou la roue d'un autre élément de suspension ne nécessite qu'un simple déplacement du véhicule sur le sol.

## Revendications

1. Procédé pour le diagnostic de l'état d'éléments de suspension d'un véhicule à chenilles ou à roues, chaque élément (4) étant pourvu d'une roue qui roule sur le sol (13) ou d'un galet (12) qui roule sur un tronçon de chenille (2a) appliqué sur le sol, et qui est mobile à peu près verticalement en étant relié par des organes de liaison mécaniques ou hydromécaniques (10,16) à un ressort (14) maintenu sur la structure (8) du véhicule,
**caractérisé en ce qu'**il consiste à :
- effectuer un simple déplacement du véhicule sur le sol ;
- détecter, en laissant le véhicule à l'arrêt posé sur le sol, la position du galet (12) ou de la roue, ou d'un organe de liaison associé (10), par rapport à la structure (8) du véhicule et détecter l'effort (F) exercé par le galet (12) sur la chenille (2) ou par la roue sur le sol (13), et de préférence aussi la température du ressort s'il est pneumatique (14) ;
- à comparer cet effort à celui requis préétabli correspondant à la position détectée et éventuellement à la température détectée.

2. Procédé selon la revendication 1,
**caractérisé en ce que** les valeurs détectées relatives à la position en question, à l'effort (F) du galet (12) ou de la roue, et éventuellement à la température du ressort (14), sont introduites manuellement ou automatiquement dans un calculateur ou un ordinateur (28) apte à comparer l'effort (F) mesuré à l'effort requis, et à afficher le diagnostic résultant de cette comparaison.

3. Dispositif pour la mise en oeuvre du procédé selon l'une des revendications 1 et 2,
**caractérisé en ce qu'**il comporte au moins un capteur (18,20) pour la détection de position du galet (12) ou de la roue, ou d'un organe de liaison (10) associé, un capteur d'effort (26) placé sous le galet (12) ou la roue, et de préférence un capteur de température (22) associé au ressort (14) s'il est pneumatique.

4. Dispositif selon la revendication 3,
**caractérisé en ce que**, le véhicule étant à chenilles (2), le capteur d'effort (26) est fixé sur un tronçon de chenille (2a) appliqué sur le sol.

5. Dispositif selon l'une des revendications 3 et 4,
**caractérisé en ce que**, les organes de liaison comprenant un bras (10) portant un galet (12) et pivotant sur un axe transversal XX de la structure (8) du véhicule, la position de pivotement du bras (10) est détectée au moyen de deux capteurs d'inclinaison (18,20) respectivement disposés sur le bras et sur la structure ;

6. Dispositif selon l'une des revendications 3 à 5, pour la mise en oeuvre du procédé selon la revendication 2,
**caractérisé en ce qu'**il comporte en outre un calculateur ou un ordinateur (28) chargé d'un logiciel spécifique dans lequel sont mémorisées et modélisées les valeurs requises (V5) de l'effort (F) exercé par le galet ou la roue en fonction de sa position et éventuellement de la température du ressort (14), et dans lequel peuvent être d'une part introduites les valeurs (V1, V2, V3, V4) mesurée par les capteurs (18,20,22,26), et d'autre part comparées les valeurs mesurée V4 et requise V5 de l'effort F.

7. Dispositif selon la revendication 6,
**caractérisé ce que** les capteurs (18,20,22,26) sont reliés au calculateur ou à l'ordinateur (28) par câbles, par radio ou par télémétrie permettant d'introduire dans ce dernier (28) les valeurs (V1,V2,V3,V4) mesurées.

## Patentansprüche

1. Verfahren zur Diagnose des Zustands von Aufhängungselementen eines Raupen- oder Radfahrzeugs, wobei jedes Element (4) mit einem Rad, das auf dem Boden (13) rollt, oder mit einer Rolle (12) versehen ist, die auf einem auf dem Boden aufliegenden Raupenabschnitt (2a) rollt, und das ungefähr senkrecht beweglich ist, indem es über mechanische oder hydromechanische Verbindungsorgane (10, 16) mit einer Feder (14) verbunden ist, die an der Fahrzeugstruktur (8) gehalten wird,
**dadurch gekennzeichnet, daß** es darin besteht:
- eine einfache Verschiebung des Fahrzeugs am Boden durchzuführen,
- indem das Fahrzeug in Ruhestellung auf dem Boden gelassen wird, die Stellung der Rolle (12) oder des Rads oder eines zugeordneten Verbindungsorgans (10) in Bezug auf die Fahrzeugstruktur (8) und die von der Rolle (12) auf die Raupe (2) oder von dem Rad auf den Boden (13) ausgeübte Kraft und vorzugsweise auch die Temperatur der Feder (14), wenn es eine Luftfeder ist, zu erfassen,
- diese Kraft mit derjenigen, vorher bestimmten, erforderlichen Kraft, die der erfaßten Stellung entspricht, und ggf. der erfaßten Temperatur zu vergleichen.

2. Verfahren nach Anspruch 1, **dadurch gekennzeichnet, daß** die in bezug auf die fragliche Stellung, auf die Kraft (F) der Rolle (12) oder des Rads, und ggf. die Temperatur der Feder (14) erfaßten Werte per Hand oder automatisch in einen Rechner oder Computer (28) eingegeben werden, der die gemessene Kraft (F) mit der erforderlichen Kraft vergleichen und die sich aus diesem Vergleich ergebende Diagnose anzeigen kann.

3. Vorrichtung zur Anwendung des Verfahrens nach einem der Ansprüche 1 und 2, **dadurch gekennzeichnet, daß** sie mindestens einen Meßfühler (18, 20) für die Positionserfassung der Rolle (12) oder des Rads oder eines zugeordneten Verbindungsorgans (10), einen Kraftmeßfühler (26), der unter der Rolle (12) oder dem Rad angeordnet ist, und vorzugsweise einen der Feder (14), falls es eine Luftfeder ist, zugeordneten Temperaturmeßfühler (22) aufweist.

4. Vorrichtung nach Anspruch 3, **dadurch gekennzeichnet, daß** bei einem Raupenfahrzeug (2) der Kraftmeßfühler (26) an einem auf dem Boden aufliegenden Raupenabschnitt (2a) befestigt ist.

5. Vorrichtung nach einem der Ansprüche 3 und 4, **dadurch gekennzeichnet, daß**, wenn die Verbindungsorgane einen eine Rolle (12) tragenden und um eine Querachse XX der Fahrzeugstruktur (8) schwenkenden Arm (10) aufweisen, die Schwenkstellung des Arms (10) mittels zweier Neigungsmeßfühler (18, 20) erfaßt wird, die je auf dem Arm bzw. auf der Fahrzeugstruktur angeordnet sind.

6. Vorrichtung nach einem der Ansprüche 3 bis 5 zur Anwendung des Verfahrens nach Anspruch 2, **dadurch gekennzeichnet, daß** sie außerdem einen Rechner oder Computer (28) aufweist, der mit einer spezifischen Software geladen ist, in dem die erforderlichen Werte (V5) der von der Rolle oder dem Rad in Abhängigkeit von ihrer Stellung ausgeübten Kraft (F) und ggf. der Temperatur der Feder (14), falls es eine Luftfeder ist, gespeichert und modelliert werden, und in den einerseits die von den Meßfühlern (18, 20, 22, 26) gemessenen Werte (V1, V2, V3, V4) eingegeben und andererseits der gemessene Wert V4 und der erforderliche Wert V5 der Kraft F verglichen werden.

7. Vorrichtung nach Anspruch 6, **dadurch gekennzeichnet, daß** die Meßfühler (18, 20, 22, 26) mit dem Rechner oder Computer (28) über Kabel, Funk oder Telemetrie verbunden sind, was es ermöglicht, in diesen letzteren (28) die gemessenen Werte (V1, V2, V3, V4) einzugeben.

## Claims

1. Method for diagnosing the condition of suspension elements of a tracked or wheeled vehicle, each member (4) being provided with a wheel that runs on the ground (13) or a roller (12) that runs on a section of track (2a) applied to the ground, and which is mobile approximately vertically while being connected by mechanical or hydromechanical linking members (10, 16) to a spring (14) held on the structure (8) of the vehicle,
**characterised in that** it consists in:
- performing a simple displacement of the vehicle over the ground;
- while leaving the vehicle stationary and placed on the ground, detecting the position of the roller (12) or the wheel, or of an associated linking member (10), with respect to the structure (8) of the vehicle and detecting the force (F) exerted by the roller (12) on the track (2) or by the wheel on the ground (13), and preferably also the temperature of the spring if it is pneumatic (14);
- comparing this force with the pre-established required force corresponding to the position detected and, if appropriate, to the temperature detected.

2. Method according to Claim 1,
**characterised in that** the values detected relating to the position in question, to the force (F) of the roller (12) or the wheel and, if appropriate, to the temperature of the spring (14), are entered manually or automatically in a calculator or a computer (28) capable of comparing the measured force (F) with the required force, and in displaying the diagnosis resulting from this comparison.

3. Device for implementing the method according to one of Claims 1 or 2,
**characterised in that** it comprises at least one sensor (18, 20) for detecting the position of the roller (12) or the wheel, or an associated linking member (10), a force sensor (26) placed under the roller (12) or the wheel and preferably a temperature sensor (22) associated with the spring (14) if it is pneumatic.

4. Device according to Claim 3,
**characterised in that**, if the vehicle is tracked (2), the force sensor (26) is fixed to a section of track (2a) applied to the ground.

5. Device according to one of Claims 3 and 4,
**characterised in that**, where the linking members comprise an arm (10) carrying a roller (12) and pivoting on a transverse axis XX of the structure (8) of the vehicle, the pivoting position of the arm (10) is detected by means of two tilt sensors (18, 20) respectively arranged on the arm and on the structure.

6. Device according to one of Claims 3 to 5, for implementing the method according to Claim 2,
**characterised in that** it further comprises a calculator or a computer (28) loaded with specific software in which the required values (V5) for force (F) exerted by the roller or the wheel as a function of its position and, if appropriate, of the temperature of the spring (14) are stored and modelled, and in which the values (V1, V2, V3, V4) measured by the sensors (18, 20, 22, 26) can be entered, on the one hand, and the measured V4 and required V5 values of the force F can be compared, on the other hand.

7. Device according to Claim 6,
**characterised in that** the sensors (18, 20, 22, 26) are connected to the calculator or computer (28) by cables, by radio or by telemetry, so that the measured values (V1, V2, V3, V4) can be entered in the latter (28).
